# EUROPÄISCHE PATENTSCHRIFT

(11) **EP 1 943 198 B1**
(45) Veröffentlichungstag und Bekanntmachung des Hinweises auf die Patenterteilung: **14.09.2011**
(21) Anmeldenummer: 06807325.3
(22) Anmeldetag: 17.10.2006
(51) Int. Cl.: C04B 28/24

(54) **NATRIUMARME SILIKATSCHAUMSTOFFE**
LOW-SODIUM SILICATE FOAMS
MOUSSES DE SILICATE A FAIBLE TENEUR EN SODIUM

(30) Priorität: 26.10.2005 DE 102005051513
(43) Veröffentlichungstag der Anmeldung: 16.07.2008
(73) Patentinhaber: BASF SE, 67056 Ludwigshafen (DE)
(72) Erfinder: BRAUN, Frank, 67063 Ludwigshafen (DE); ALTEHELD, Armin, 55543 Bad Kreuznach (DE); HAHN, Klaus, 67281 Kirchheim (DE); STERZEL, Hans-Josef, 67125 Dannstadt-Schauernheim (DE); HIBST, Hartmut, 69198 Schriesheim (DE); MÖCK, Christof, 68259 Mannheim (DE)
(86) Internationale Anmeldenummer: PCT/EP2006/067472
(87) Internationale Veröffentlichungsnummer: WO 2007/048729

(56) Entgegenhaltungen:
- EP-A1- 0 063 609
- EP-A1- 1 142 619
- WO-A2-03/018476
- DE-A1- 2 165 912
- GB-A- 1 430 875
- US-A- 4 221 578

## Beschreibung

Die Erfindung betrifft einen Schaumstoff auf Silikatbasis mit einer Dichte von weniger als 25 kg/m³.

Zur Wärme- und Schalldämmung werden häufig organische Schaumstoffe auf Basis von Polystyrol, Polyolefinen oder Polyurethanen eingesetzt. Diese sind jedoch ohne Zusatz von Flammschutzadditiven verhältnismäßig leicht entflammbar und brennbar. Schaumstoffe auf anorganischer Basis sind naturgemäß schwer entflammbar. Sie weisen jedoch in der Regel eine relativ hohe Dichte und Sprödigkeit auf.

Die GB 986 635 beschreibt ein Verfahren zur Herstellung von calcinierter Tonerde als Füllstoff für Papier und Kunststoff. Hierfür wird eine wässrige Aufschlämmung der Tonerde in einen stabilen Schaum überführt, der calciniert und anschließend in ein feines Pulver zerrieben werden kann.

Die US 3,737,332 beschreibt einen geschlossenzelligen Schaumstoff hoher Dichte, der durch Einblasen von Luft in eine Tonerdeaufschlämmung und anschließendes Trocknen und Calcinieren bei Temperaturen im Bereich von 540 bis 1500°C erhalten werden kann. Die Geschlossenzelligkeit wird durch die Stabilisierung der Tonerdeaufschlämmung durch Fettsäureamide erreicht.

Die DE-A 36 17 129 beschreibt ein Verfahren zum Ausschäumen von Hohlräumen durch Vermischen einer Silikatlösung mit einem Härter und einer durch eine chemische Reaktion Gas erzeugenden Komponente, Beispiel Wasserstoffperoxid. Durch Vermischen der Komponenten und Einspritzen in den Hohlraum vor Ort wird ein Schaumstoff mit einer Dichte im Bereich von 30 bis 1000 kg/m³ erhalten.

Die WO 03/018476 beschreibt einen elastischen anorganischen Schaumstoff mit einer Dichte von weniger als 25 kg/m³ auf Basis eines Alumosilikats mit einem Molverhältnis SiO₂: Al₂O₃ von 20 : 1 bis 1 : 1.

Aufgabe der vorliegenden Erfindung war es, einen Schaumstoff auf Silikatbasis mit niedriger Dichte bereitzustellen, der neben der Eigenschaft der Nichtbrennbarkeit gute Wärme- und Schalldämmeigenschaften aufweist.

Demgemäß wurde ein Schaumstoff auf Silikatbasis mit einer Dichte von weniger als 25 kg/m³ gefunden, wobei das Molverhältnis SiO₂: Al₂O₃ von größer 20 : 1 und ein Molverhältnis SiO₂ : Me₂O größer als 50 : 1 beträgt, und wobei Me ein Alkalimetall, beispielsweise Lithium, Kalium, Natrium, Rubidium oder Cäsium bedeutet.

Bevorzugt liegt das Molverhältnis SiO₂ : Al₂O₃ über 50 : 1 und das Molverhältnis SiO₂ : Me₂O über 100 : 1. Besonders bevorzugt besteht der Schaumstoff im wesentlichen aus SiO₂, wobei insbesondere Aluminium und Natrium in Mengen unter 5000 ppm, insbesondere unter 3000 ppm vorliegen.

Die Dichte des Schaumstoffs beträgt bevorzugt kleiner 20 kg/m³, besonders bevorzugt liegt sie im Bereich von 5 bis 18 kg/m³.

Der erfindungsgemäße Schaumstoff hat bevorzugt eine offenzellige Struktur mit einer Offenzelligkeit, gemessen nach DIN ISO 4590 von mehr als 50 %, insbesondere mehr als 80 %.

Der Schmelzpunkt oder Erweichungspunkt des erfindungsgemäßen Schaumstoffs liegt bevorzugt über 1600 °C. Mechanisch stabile Silikatschaumstoffe mit hohem Schmelzpunkt oder Erweichungspunkt können erhalten werden, wenn man von einer kolloidalen, wässrigen Dispersion kleiner, fester Siliciumdioxidpartikel, welche die oben beschriebenen, geringen Anteile an Aluminium und Alkalimetall aufweisen, ausgeht. Diese können in Gegenwart eines Tensides und eines Treibmittels wie in WO 03/018476 beschrieben, verschäumt und bei Temperaturen im Bereich von 50 bis 500°C verfestigt werden.

Ein bevorzugtes Verfahren zur Herstellung des erfindungsgemäßen Schaumstoffes auf Silikatbasis umfasst die Stufen:
a) Vermischen einer Dispersion von SiO₂-Partikel, welche einen mittleren Partikeldurchmesser im Bereich von 1 bis 100 nm, bevorzugt im Bereich von 10 bis 50 nm aufweisen, mit einem Tensid und einem Treibmittel bei Temperaturen unterhalb von 50°C und
b) Verschäumen der Mischung durch Erwärmen auf eine Temperatur im Bereich von 60 bis 100°C oder durch eine Druckentspannung.

Bevorzugt wird in Stufe a) eine wässrige, kolloidale SiO₂-Partikel-Dispersion eingesetzt, welche durch Oniumionen, insbesondere Ammoniumionen, wie NH₄⁺ als Gegenion stabilisiert ist. Die spezifische Oberfläche der SiO₂-Partikel liegt in der Regel im Bereich von 10 bis 3000 m²/g, bevorzugt im Bereich von 30 bis 1000 m²/g. Der Feststoffgehalt kommerzieller SiO₂-Partikel-Dispersion hängt von der Partikelgröße ab und liegt in der Regel im Bereich von 10 bis 60, bevorzugt im Bereich von 30 bis 50 Gew.-%. Wässrige, kolloidale SiO₂-Partikel-Dispersionen können durch Neutralisation von verdünnten Natriumsilikaten mit Säuren, Ionenaustauch, Hydrolyse von Siliziumverbindungen, Dispersion von pyrogenem Silikat oder Gel-Fällung erhalten werden.

Bevorzugte Treibmittel sind flüchtige organische Verbindungen, wie z.B. Kohlenwasserstoffe, halogenierte Kohlenwasserstoffe, Alkohole, Ether, Ketone und Ester. Besonders bevorzugt sind C₄-C₈-Kohlenwasserstoffe, insbesondere Butan, Pentan oder Hexan. Die Treibmittel werden bevorzugt in Mengen von 1 bis 40, insbesondere 5 bis 25 Gew.-%, bezogen auf die Feststoffe, eingesetzt.

Zur Emulgierung des Treibmittels und zur Stabilisierung des Schaumes ist der Zusatz eines Emulgators oder eines Emulgatorgemisches erforderlich. Als Emulgator können anionische, kationische und nichtionische Tenside verwendet werden.

Geeignete anionische Tenside sind Diphenylenoxidsulfonate, Alkan- und Alkylbenzolsulfonate, Alkylnaphthalinsulfonate, Olefinsulfonate, Alkylethersulfonate, Alkylsulfate, Alkylethersulfate, alpha-Sulfofettsäureester, Acylaminoalkansulfonate, Acylisethionate, Alkylethercarboxylate, N-Acylsarcosinate, Alkyl- und Alkyletherphosphate. Als nichtionische Tenside können Alkylphenolpolyglykolether, Fettalkoholpolyglykolether, Fettsäurepolyglykolether, Fettsäurealkanolamide, EO/PO-Blockcopolymere, Aminoxide, Glycerinfettsäureester, Sorbitanester und Alkylpolyglucoside verwendet werden. Als kationische Tenside kommen Alkyltriammoniumsalze, Alkylbenzyldimethylammoniumsalze und Alkylpyridiniumsalze zum Einsatz. Die Emulgatoren werden vorzugsweise in Mengen von 0,1 bis 5 Gew.-%, bezogen auf die SiO₂-Partikel, zugesetzt.

Die zu verschäumende Mischung kann weiterhin übliche-Zusatzstoffe, wie z.B. Pigmente und Füllstoffe enthalten.

Das Verschäumen der aus Stufe a) erhaltenen Mischung kann in Stufe b) durch Erwärmen bzw. Erhitzen mit üblichen Methoden durchgeführt werden, z.B. mit Heizschrank, Heißluft oder Mikrowelle. Die Mikrowelle ist bevorzugt, weil sie eine besonders homogene und schnelle Erwärmung bzw. Erhitzung ermöglicht.

Bei einer anderen Ausführungsform wird die Mischung in Stufe b) durch Druckentspannung verschäumt. Dadurch kommt es zur Expansion des Treibmittels und es bildet sich ebenfalls ein fester Schaum. Die Druckminderung beinhaltet auch, dass die Mischung unter einem Druck P1 durch eine Düse auf einen Druck P2<P1 entspannt wird, wobei P1>1 bar ist. Bei diesen Ausführungsformen ist eine Erwärmung zum Zweck der Schäumung nicht zwingend nötig.

Zur Erhöhung der mechanischen Stabilität, wird der Schaumstoff in der Regel nach Stufe b) bei 100 bis 140°C getrocknet und in einer nachfolgenden Stufe c) bei einer Temperatur im Bereich von 200 bis 500°C versintert.

Bei dem beschriebenen Verfahren entstehen Schaumstoffblöcke bzw. -platten, die zu beliebigen Formen zurechtgeschnitten werden können.

Der erfindungsgemäße Schaum kann auf vielfältige Weise zur Wärme- und Schalldämmung im Bauwesen und im Automobilbau eingesetzt werden, beispielsweise zur Wärmedämmung im Hausbau oder als schalldämmendes Material im Motorraum.

### Beispiele

A) SiO₂-Partikel-Dispersion (Partikeldurchmesser ca. 20 nm), mit NH₄⁺ als Gegenionen stabilisiert und einem Feststoffgehalt von 40 Gew.-%
B) Wässrige Lösung eines Alkylethersulfates mit einem Feststoffgehalt von 30 Gew.-%.

### Beispiel 1

184 g der Dispersion A), 3,7 g der Tensidlösung B) und 28 g Pentan wurden bei 25°C durch intensives Rühren vermischt und in eine Form gegossen. Durch Erwärmen im Mikrowellenofen auf ca. 80°C entstand ein Schaumstoffblock, der nach Trocknung bei 120°C und anschließender Sinterung bei 300°C eine Dichte von 15 g/l aufwies.

## Patentansprüche

1. Schaumstoff auf Silikatbasis mit einer Dichte von weniger als 25 kg/m³, **dadurch gekennzeichnet, dass** er ein Molverhältnis SiO₂ : Al₂O₃ von größer als 20 : 1 und ein Molverhältnis SiO₂ : Me₂O von größer 50 : 1 aufweist, wobei Me ein Alkalimetall bedeutet.

2. Schaumstoff nach Anspruch 1, **dadurch gekennzeichnet, dass** er eine Offenzelligkeit nach DIN ISO 4589 von mehr als 50 % aufweist.

3. Schaumstoff nach Anspruch 1 oder 2, **dadurch gekennzeichnet, dass** er einen Schmelzpunkt oder Erweichungspunkt über 1600°C aufweist.

4. Verfahren zur Herstellung eines Schaumstoffes auf Silikatbasis, umfassend die Stufen:
a) Vermischen einer Dispersion von SiO₂-Partikel, welche einen mittleren Partikeldurchmesser im Bereich von 1 bis 100 nm aufweisen, mit einem Tensid und einem Treibmittel bei Temperaturen unterhalb von 50°C und
b) Verschäumen der Mischung durch Erwärmen auf eine Temperatur im Bereich von 60 bis 100°C oder durch Druckentspannung.

5. Verfahren nach Anspruch 4, **dadurch gekennzeichnet, dass** man den Schaumstoff nach Stufe b) bei einer Temperatur im Bereich von 200 bis 500°C versintert.

6. Verfahren nach Anspruch 4 oder 5, **dadurch gekennzeichnet, dass** die SiO₂-Partikel-Dispersion durch Ammoniumionen stabilisiert ist.

7. Verfahren nach einem der Ansprüche 4 bis 6, **dadurch gekennzeichnet, dass** als Tensid ein Alkylethersulfat eingesetzt wird.

8. Verfahren nach einem der Ansprüche 4 bis 7, **dadurch gekennzeichnet, dass** als Treibmittel ein C₄-C₈-Kohlenwasserstoff eingesetzt wird.

9. Verwendung des Schaumstoffes nach einem der Ansprüche 1 bis 3 zur Wärme- oder Schalldämmung.

## Claims

1. A silicate-based foam whose density is less than 25 kg/m³, whose molar SiO₂ : Al₂O₃ ratio is greater than 20 : 1 and whose molar SiO₂ : Me₂O ratio is grater than 50 : 1, where Me is an alkali metal.

2. The foam according to claim 1, whose open cell factor to DIN ISO 4589 is more than 50%.

3. The foam according to claim 1 or 2, whose melting point or softening point is above 1600°C.

4. A process for production of a silicate-based foam, comprising the stages of:
a) mixing of a dispersion of SiO₂ particles whose average diameter is in the range from 1 to 100 nm with a surfactant and with a blowing agent at temperatures below 50°C, and
b) foaming of the mixture via heating to a temperature in the range from 60 to 100°C, or via depressurization.

5. The process according to claim 4, wherein after stage b) the foam is sintered at a temperature in the range from 200 to 500°C.

6. The process according to claim 4 or 5, wherein the SiO₂ particle dispersion has been stabilized via ammonium ions.

7. The process according to any of claims 4 to 6, wherein an alkyl ether sulfate is used as surfactant.

8. The process according to any of claims 4 to 7, wherein a C₄-C₈ hydrocarbon is used as blowing agent.

9. The use of the foam according to any of claims 1 to 3 for thermal insulation or sound deadening.

## Revendications

1. Mousse à base de silicate, ayant une densité de moins de 25 kg/m³, **caractérisée en ce qu'**elle présente un rapport molaire SiO₂:Al₂O₃ supérieur à 20:1 et un rapport molaire SiO₂:Me₂O supérieur à 50:1, Me représentant un métal alcalin.

2. Mousse selon la revendication 1, **caractérisée en ce qu'**elle présente une proportion de cellules ouvertes selon DIN ISO 4589 de plus de 50 %.

3. Mousse selon la revendication 1 ou 2, **caractérisée en ce qu'**elle présente un point de fusion ou point de ramollissement supérieur à 1 600°C.

4. Production pour la production d'une mousse à base de silicate, comprenant les étapes :
a) mélange d'une dispersion de particules de SiO₂, qui ont un diamètre moyen de particule de 1 à 100 nm, avec un tensioactif et un agent d'expansion, à des températures inférieures à 50 °C et
b) expansion du mélange par chauffage à une température dans la plage de 60 à 100 °C ou par détente de pression.

5. Procédé selon la revendication 4, **caractérisé en ce qu'**après l'étape b) on soumet la mousse à un frittage à une température dans la plage de 200 à 500°C.

6. Procédé selon la revendication 4 ou 5, **caractérisé en ce que** la dispersion de particules de SiO₂ est stabilisée par des ions ammonium.

7. Procédé selon l'une quelconque des revendications 4 à 6, **caractérisé en ce qu'**on utilise comme tensioactif un alkyléthersulfate.

8. Procédé selon l'une quelconque des revendications 4 à 7, **caractérisé en ce qu'**on utilise comme agent d'expansion un hydrocarbure en C₄-C₈.

9. Utilisation de la mousse selon l'une quelconque des revendications 1 à 3, pour l'isolation thermique ou phonique.
